# FASCICULE DE BREVET EUROPEEN

(11) **EP 0 719 850 B1**
(45) Date de publication et mention de la délivrance du brevet: **15.09.1999**
(21) Numéro de dépôt: 95402516.9
(22) Date de dépôt: 10.11.1995
(51) Int. Cl.: C10G 11/18

(54) **Procédé et dispositif pour le strippage de solides fluidisés, et utilisation dans un procédé de craquage à l'état fluide**
Verfahren und Einrichtung zur Strippung von suspendierten Feststoffen und Anwendung in Fliesskrackverfahren
Process and apparatus for the stripping of fluidized solids and use in a fluidized cracking process

(30) Priorité: 29.12.1994 FR 9415856
(43) Date de publication de la demande: 03.07.1996
(73) Titulaire: TOTAL RAFFINAGE DISTRIBUTION S.A., 92800 Puteaux (FR)
(72) Inventeur: Senegas, Marie-Andrée, F-27450 St Georges du Vievre (FR); Selem, Philippe, F-76290 Montivilliers (FR); Patureaux, Thierry, F-76290 Fontaine la Mallet (FR); Mauleon, Jean-Louis, F-27500 Ste Croix sur Aizier (FR)
(74) Mandataire: Jolly, Jean-Pierre

(56) Documents cités:
- US-A- 2 472 502
- US-A- 2 481 439

## Description

La présente invention concerne le strippage de particules ou grains solides dans les lits fluidisés. Elle a plus particulièrement pour objet un procédé et un dispositif pour stripper, par un fluide, des solides en lit fluidisé, notamment pour éliminer les vapeurs d'hydrocarbures entraînées dans les vides entre les particules et adsorbées sur les dites particules.

L'invention s'applique plus particulièrement à des techniques utilisées dans l'industrie pétrolière. Notamment, l'invention s'applique aux procédés de craquage en lit fluidisé, dans lesquels des molécules d'hydrocarbures à haut poids moléculaire et à point d'ébullition élevé sont scindées en molécules plus petites, qui peuvent bouillir dans des intervalles de températures plus faibles, convenant à l'usage recherché.

L'un des procédés les plus couramment employés dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est simultanément vaporisée et mise en contact à haute température avec des grains de catalyseur de craquage, qui sont maintenus en suspension dans les vapeurs de la charge et entraînés par celle-ci. Après avoir atteint par craquage la gamme de poids moléculaire désirée, avec un abaissement correspondant des points d'ébullition, les produits obtenus sont séparés des grains de catalyseur, et ces derniers sont strippés afin de récupérer les hydrocarbures entraînés, puis régénérés par combustion du coke formé, et remis en contact avec la charge à craquer.

Dans ce procédé, la réduction souhaitée des points d'ébullition des hydrocarbures résulte de réactions catalytiques et thermiques contrôlées. Ces réactions interviennent de façon quasi-instantanée, lorsque la charge finement atomisée est mise en contact avec les grains de catalyseur. Ceux-ci se désactivent cependant rapidement, pendant le court laps de temps où il sont en contact avec la charge, et ceci du fait, essentiellement, d'une adsorption d'hydrocarbures et d'un dépôt de coke et d'autres contaminants sur leurs sites actifs. Il est donc nécessaire de stripper en continu les grains désactivés de catalyseur, par exemple à la vapeur, pour en récupérer les hydrocarbures adsorbés et entraînés dans le volume vide séparant les grains en suspension, et de les régénérer, également en continu, sans altérer leurs caractéristiques, par une combustion contrôlée du coke, dans une section de régénération à un ou plusieurs étages, avant de recycler les grains de catalyseur vers la zone réactionnelle.

De nombreux dispositifs et procédés de craquage catalytique sont décrits dans l'article du journal "Oil & Gas Journal, May 18, 1992, pp 68-71", auquel on pourra se référer pour plus de détails. D'autres dispositifs et procédés à lit mobile, à lit fluidisé circulant ou à lit ébulliant, autre que ceux se rapportant au craquage catalytique, et comprenant un dispositif de strippage, tels que les procédés MTG de la compagnie pétrolière Mobil et DCC de la société d'ingénierie Stone & Webster, sont également concernés par la présente invention.

Le strippage est l'une des étapes déterminantes dans le procédé de craquage catalytique à l'état fluide. En cas de strippage insuffisant, des vapeurs d'hydrocarbures demeurent en effet sur et entre les grains de catalyseur et, lors de l'étape de régénération, une charge additionnelle de combustion est imposée au régénérateur. De ce fait, la combustion des vapeurs d'hydrocarbures entraînées dans le régénérateur représente une perte sur le rendement final en produit converti.

Selon une des techniques usuelles, dans le cas d'une colonne de réaction essentiellement ascendante, le strippage s'effectue dans une enceinte située à l'extrémité supérieure de la colonne de réaction, après séparation des effluents issus de la zone réactionnelle. Généralement, cette enceinte se caractérise par un rapport hauteur sur diamètre élevé. Elle peut revêtir différentes formes et être, par exemple, un réservoir à section circulaire ou hexagonale.

Cette enceinte se divise en deux zones. Dans la première zone, située au niveau supérieur de l'enceinte, un dispositif de séparation balistique de type connu en soi, illustré par exemple dans les brevets US N° 2 574 422 et N° 2 576 906, permet de séparer les effluents des grains de catalyseur et d'orienter les grains de catalyseur vers le bas, tandis que les vapeurs d'hydrocarbures remontent vers le haut et sont, après séparation complémentaire des fines de catalyseur à l'aide d'un système cyclonique, envoyées vers la zone de fractionnement. Dans la seconde zone, située au niveau inférieur de l'enceinte, le strippage s'opère en phase fluidisée dense. Un fluide gazeux, injecté à la base de l'enceinte, lave à contre-courant la suspension de grains désactivés de catalyseur et permet le déplacement et la récupération des hydrocarbures entraînés dans les vides entre les grains de catalyseurs désactivés ou adsorbés à leurs surfaces. Finalement, les grains de catalyseur strippés sont évacués par une sortie se situant à la base de l'enceinte et les conduisant à la zone de régénération.

Afin d'optimiser cette opération de strippage, il est connu d'utiliser des fluides gazeux de préférence très polaires, tels que la vapeur d'eau, plus fortement adsorbée que les hydrocarbures sur les grains de catalyseur et donc améliorant la désorption des hydrocarbures.

Toutefois, cette opération de strippage demeure délicate. Notamment, il est difficile de contrôler le parcours des grains de catalyseur et d'éviter les phénomènes de défluidisation partielle liés au renardage (traversée directe du lit fluidisé par de grosses bulles) et au rétromélange (descente des particules mal fluidisées dans la région de la paroi de l'enceinte de strippage), appelé communément "backmixing". Ainsi, le temps moyen de strippage des grains désactivés de catalyseur et la qualité du contact entre les grains et le fluide gazeux apparaissent difficilement maîtrisables, notamment dans les lits fluidisés de grand volume.

Ce temps de strippage est critique et doit être limité pour éviter des réactions secondaires, en particulier de la cokéfaction. De même, ce temps moyen doit être suffisant, afin que la réaction de régénération ne soit pas handicapée par la présence de combustible ayant pour effet d'augmenter la charge de combustion du régénérateur.

La quantité de coke présent sur le catalyseur, à l'entrée de la zone de régénération, ainsi que le mode de régénération déterminent la température finale atteinte dans la zone de régénération, car les calories provenant de la combustion du coke servent à la fois, outre les pertes de chaleur, à réchauffer le fluide de régénération (air et/ou oxygène) et se partagent entre les gaz de combustion et les particules de catalyseur. En régime de fonctionnement stable, la quantité de coke produit dans l'unité de craquage sera donc sensiblement constante, si l'équilibre thermique n'est pas modifié par des contraintes extérieures.

Cette quantité de coke est liée à la différence Δcoke entre les quantités de coke présentes sur le catalyseur à l'entrée de la zone de régénération et à la sortie de cette zone.

Si le Δcoke croît, ainsi, par conséquent, que la température du catalyseur régénéré, il est nécessaire, pour maintenir la température de réaction dans des limites acceptables de réduire le débit des grains de catalyseur en circulation. Par ailleurs, l'accroissement du Δcoke correspond à une température de régénération plus élevée des grains de catalyseur. Ainsi, le contrôle du Δcoke, dans une unité moderne de craquage par le procédé FCC, où la température de régénération n'est pas limitée, apparaît-il comme une des variables de base fondamentales du procédé.

Actuellement, avec des conditions opératoires de plus en plus sévères du procédé FCC, correspondant à des charges de plus en plus lourdes et, par conséquent, à point d'ébullition élevé, on constate un dépôt accru de coke sur les grains de catalyseur. Dans une certaine mesure, ceci peut se révéler utile, car il en résulte une température plus élevée des grains à l'entrée de la zone de réaction, ce qui permet une vaporisation plus complète de la charge, un craquage thermique contrôlé des asphaltènes et une énergie plus élevée apportée par le catalyseur. Cependant, il est souhaitable de pouvoir contrôler et limiter la température de régénération des grains de catalyseur, en vue de préserver sa stabilité thermique et de réduire l'effet néfaste de certains constituants présents dans la charge, notamment dans les résidus les plus réfractaires. En outre, il est parfois désirable d'augmenter le rapport C/O, c'est-à-dire le rapport massique du catalyseur C en contact avec la charge O à l'entrée de la colonne de réaction, afin d'améliorer le contact entre la charge et les grains de catalyseur, et d'accroître la conversion de la charge en mettant celle-ci en présence d'un plus grand nombre de sites actifs des grains de catalyseur.

Pour améliorer le strippage, diverses techniques ont déjà été proposés. Notamment, les brevets suivants illustrent des solutions envisagées pour améliorer le strippage.

Le brevet US N° 2 472 502 décrit un dispositif de strippage comportant une zone de sections à grillage, séparées les unes des autres dans la zone de strippage et transversales à l'axe de l'enceinte du réacteur. Ces sections à grillage limitent la circulation indésirable des particules solides. Le déposant indique que le pourcentage de particules solides non strippées descendant directement vers la zone de régénération est limité par ce dispositif. Il ajoute que, parallèlement, la possibilité pour les particules solides strippées de recirculer vers le haut est aussi diminuée.

Le brevet US N° 2 481 439 a pour objet un dispositif de strippage comportant une zone de sections à grillage espacées les unes des autres. Les sections à grillage comportent des cellules et sont espacées de façon à éviter la formation de canaux d'écoulement du gaz de strippage à travers le flot descendant des particules solides. Les sections à grillage occupent une partie majeure de la longueur de la zone de strippage tandis que les espaces entre les sections à grillage forment une partie mineure de la dite zone de strippage. Ces espaces sont utilisés pour la redistribution des particules solides et du gaz de strippage, ceci permettant la formation d'un mélange dense fluidisé turbulent. De plus, les cellules des sections à grillage subdivisent le courant de gaz en une pluralité de petits courants. Ainsi, selon le déposant, les particules solides, lors de leurs passages à travers les cellules délimitées par les sections à grillage, contactent intimement ces subdivisions de courant de gaz.

Le brevet US N° 2 491 536 décrit un dispositif de strippage de construction sensiblement identique à celui divulgué dans le brevet US N° 2 472 502. La partie la plus basse de la zone de strippage, où le gaz de strippage est introduit, est divisée en cellules et les sections à grillage sont uniquement disposées dans la partie restante de la zone de strippage. L'espace entre les sections à grillage permet de redistribuer des particules solides dans le gaz de strippage et de prévenir ledit gaz de s'écouler dans un conduit formé par les plus petites cellules des sections à grillage.

Les dispositifs présentés dans les brevets ci-dessus ne résolvent que très partiellement les problèmes liés au strippage. De plus, les moyens décrits ne sont pas adaptés à l'évolution et à la mise en oeuvre nouvelle des technologies, notamment aux conditions opératoires de plus en plus sévères d'une unité FCC.

Afin d'obtenir de bons résultats et de résoudre les problèmes liés à la technologie antérieure, la demanderesse a conçu un dispositif et un procédé pour améliorer le strippage de particules solides fluidisées.

Ce dispositif de strippage à contre courant de fluide gazeux comprend :
- une enceinte de strippage sensiblement verticale ;
- au moins un conduit débouchant au sommet de l'enceinte pour l'introduction des particules à stripper ;
- au moins un conduit raccordé à la base de l'enceinte pour l'évacuation des particules strippées ;
- au moins une ligne d'évacuation de la charge craquée ;
- au moins une ligne d'alimentation de fluide gazeux de strippage débouchant à la base de l'enceinte ;
- à l'intérieur de l'enceinte, une zone de circulation vers le bas des particules en suspension à stripper à contre-courant du fluide ;
et il est caractérisé en ce qu'il comporte au moins un garnissage, constitué d'au moins un élément dont la section de passage est essentiellement transversale à l'axe de l'enceinte, cet élément s'étendant suivant toute la section transversale de l'enceinte dans la zone de circulation et étant constitué de cellules à travers lesquelles passent les particules et le fluide de strippage, ces cellules orientant de façon sensiblement radiale la circulation du fluide et des particules à stripper.

Cette orientation radiale permet une meilleure dispersion et homogénéisation des particules avec le fluide de strippage. Notamment, après passage dans l'élément de garnissage, les particules sont redistribuées dans l'espace, en assurant un état de perturbation organisé avec le fluide, qui favorise les contacts de façon aléatoire. De plus, l'élément de garnissage évite l'apparition des phénomènes de rétromélange et de renardage des particules, ainsi que la formation de poches solides ou gazeuses.

L'utilisation de l'élément de garnissage permet en outre de diminuer les dimensions de la zone de contact des particules avec le fluide. En effet, puisque ce contact est nettement amélioré, il est possible d'utiliser des enceintes de strippage de taille plus réduite par rapport à l'art antérieur, sans perte de performance du strippage. Ceci s'explique, en partie, par les actions de divisions et recombinaisons générées par les parois des cellules de l'élément de garnissage, qui subdivisent le fluide injecté en fines bulles de taille identique et provoquent une répartition homogène des bulles à l'intérieur et à l'extérieur du dit élément, favorisant un contact plus important avec les particules.

L'invention a également pour objet le procédé de strippage associé à ce nouveau dispositif de strippage. Ce procédé de strippage de solides fluidisés provenant de particules, à contre-courant d'un fluide de strippage, comprend les étapes suivantes :
- introduire les particules à stripper au sommet d'une enceinte sensiblement verticale ;
- introduire le fluide de strippage à la base de l'enceinte ;
- faire circuler les particules en suspension vers le bas à travers la zone de circulation de l'enceinte, à contre-courant du dit fluide ;
et il est caractérisé en ce que l'on fait circuler les particules et le fluide à contre-courant à travers au moins un garnissage constitué d'au moins un élément dont la section de passage est transversale par rapport à l'axe de l'enceinte, cet élément étant disposé suivant toute la section transversale de l'enceinte dans la zone de circulation et étant constitué de cellules qui orientent radialement le fluide et les particules.

Le dispositif, et le procédé conformes à l'invention, permettent de récupérer de façon plus avantageuse les solides fluidisés entraînés dans le volume inter- et intra-particulaire de la suspension de particules à contre courant de fluide.

Dans le cas d'une unité FCC, les particules sont des grains désactivés de catalyseur. Le contact intime des grains avec le fluide généré par l'orientation radiale favorise une meilleur désorption des hydrocarbures fluidisés présents à la surface et dans les pores des particules. De plus, l'orientation radiale du fluide gazeux autorise une meilleure récupération des hydrocarbures entraînés dans l'espace entre les grains. Ainsi, le Acoke est moins élevé et le rapport C/O est augmenté, ce qui contribue à procurer plus de souplesse pour satisfaire l'équilibre thermique et réactionnel de l'unité.

Selon un mode de réalisation, les particules et le fluide à contre courant sont déviés dans deux directions différentes à leur sortie de l'élément de garnissage. Sensiblement 50% du fluide gazeux et des particules sont déviés dans une première direction et sensiblement 50% du fluide gazeux et des particules sont déviés dans une seconde direction formant un angle de 10 à 90 degrés avec la première direction. Ces déviations et cette orientation radiale sont induites par la géométrie des cellules formant l'élément de garnissage. Les dites cellules peuvent revêtir de nombreuses formes.

Par exemple, ces cellules peuvent être constituées par l'assemblage de tôles plissées coupées transversalement par rapport à leurs plans. Ces tôles plissées peuvent être perforées, striées ou rugueuses, et sont assemblées de façon telle que l'arête de plissure de chaque tôle forme un angle de sensiblement 45 à 135 degrés avec l'arête de plissure de la tôle adjacente. Selon un mode particulièrement préféré de l'invention, cet angle est de 90 degrés, définissant ainsi des réseaux de canaux croisés à angle droit. Ces croisements permettent avantageusement un contact étroit entre le fluide et les particules à l'intérieur du garnissage. Eventuellement, les canaux croisés du réseau ont un passage uniforme.

La disposition des tôles favorise la déviation des particules et du fluide à l'intérieur des éléments. Notamment, dans la forme de réalisation décrite ci-dessus, 50% des particules et du fluide gazeux sont déviés à chaque intersection formée par les arêtes de plissures d'une première tôle avec les arêtes de plissures d'une seconde tôle adjacente, la direction de cette déviation étant de sensiblement 10 à 90 degrés par rapport à leur direction initiale. Ces intersections constituent des zones de contact privilégiées entre les particules et le fluide de strippage.

Diverses structures d'élément de garnissage employées dans d'autres domaines peuvent être utilisées pour réaliser l'invention. Notamment, les mélangeurs statiques tels que ceux commercialisés par les Sociétés dénommées Sulzer-SMV ou Kenics, bien que non destinés à cette application, peuvent être adaptés et modifiés pour constituer un élément de garnissage selon l'invention.

Selon le type de l'enceinte de strippage, celle ci comportera un ou plusieurs éléments de garnissage.Dans un mode préféré de réalisation, l'enceinte de strippage comporte au moins deux éléments de garnissage.Dans un mode particulièrement préféré et illustré par les dessins et exemples qui seront décrits ci-après, l'enceinte comporte trois éléments de garnissage.Dans certains cas, notamment pour une utilisation dans le domaine de FCC, les éléments de garnissage sont espacés, afin de favoriser la redistribution des particules dans le fluide et de permettre le passage de débris notamment de coke. Le garnissage pourra avantageusement occuper 20 à 80 % du volume intérieur de l'enceinte de strippage.

Si le strippeur comporte plus d'un élément de garnissage, ceux-ci sont positionnés à l'intérieur du strippeur de façon telle que le plan des directions des grains de catalyseur et du fluide, après passage dans un premier élément, forme un angle de sensiblement 90 degrés avec le plan des directions des grains de catalyseur et du fluide après passage dans un second élément.

Selon la forme des cellules précédemment décrite, le plan des tôles plissées d'un premier élément sera donc préférentiellement orienté de façon à former un angle de sensiblement 45 à 90 degrés avec le plan des tôles plissées du second élément voisin. De ce fait, la direction des grains de catalyseur et du fluide est modifiée non seulement à l'intérieur des éléments, mais aussi à leur entrée et à leur sortie de chaque élément de garnissage.

L'épaisseur totale E du ou des éléments de garnissage est choisie en fonction de la hauteur H de la zone de strippage où s'opère le contact des particules avec le fluide. Généralement, cette épaisseur représente 10 à 80% de la hauteur de la zone de strippage.

De plus, pour chaque élément de garnissage, le volume des cellules par rapport au volume total de cet élément est compris entre 50 et 98 % et préférentiellement entre 90 et 98 %, ce qui contribue à une bonne circulation des particules et des gaz de strippage sans freiner leurs états de turbulence.

Les dessins annexés illustrent, sous une forme schématique, un dispositif de strippage dans lequel est mise en oeuvre une forme de l'invention, particulièrement dans le domaine du craquage fluidisé catalytique. La description détaillée des dessins permettra de mieux comprendre l'objet et les avantages de ce nouveau dispositif de strippage. Bien entendu, les exemples donnés n'ont pas de caractère limitatif et l'homme de l'art saura adapter le dispositif décrit à d'autres unités nécessitant une étape de strippage.

Sur les dessins :
La figure 1 représente un dispositif classique de craquage catalytique ;
La figure 2 représente un mode de réalisation de l'invention adapté au strippeur d'une unité FCC ;
La figure 3 représente une vue de dessus d'une section d'un élément de garnissage ;
La figure 4 représente une vue d'ensemble d' un garnissage selon l'invention.

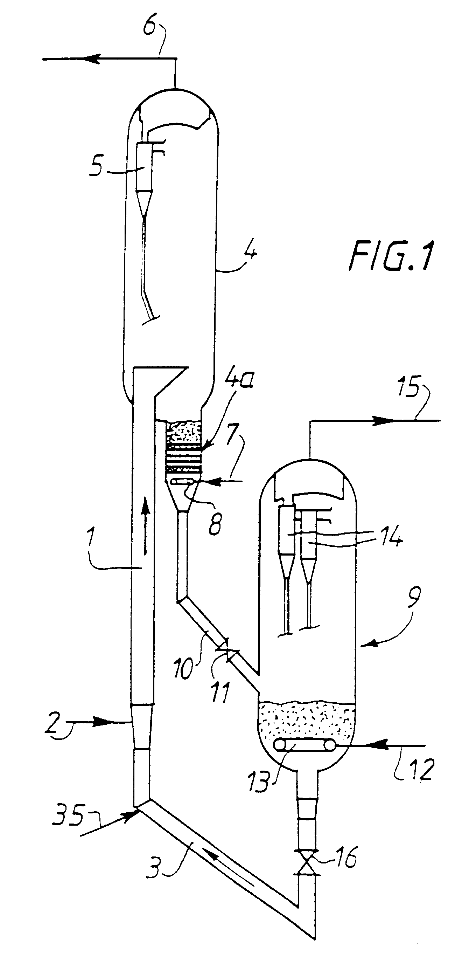

Le dispositif de craquage catalytique par le procédé FCC représenté schématiquement sur la figure 1 est d'un type connu en soi. Il comprend essentiellement une colonne extérieure 1, dite élévateur de charge, alimentée à sa base, par la ligne 2, en charge à traiter et, par le conduit 3, en particules d'un catalyseur de craquage. Un gaz élévateur, par exemple de la vapeur d'eau, est introduit dans la colonne 1 par la ligne 35.

La colonne extérieure 1 débouche à son sommet dans une enceinte 4, dans laquelle s'effectuent la séparation de la charge craquée et le strippage des particules désactivées de catalyseur.

Dans le cas présent, le strippeur 4a est excentré par rapport à la colonne. Toutefois, le strippeur peut revêtir d'autres formes et positions. Par exemple, le strippeur peut être concentrique à la colonne, ce qui nécessite un dessin adapté des éléments.

La charge traitée est séparée dans un cyclone 5, qui est logé dans l'enceinte 4, au sommet de laquelle est prévue une ligne d'évacuation 6 de la charge craquée, tandis que les particules désactivées se déplacent par gravité vers la base 4a de l'enceinte 4. Une ligne 7 alimente en fluide de strippage, généralement de la vapeur d'eau, des injecteurs ou diffuseurs de gaz de fluidisation 8 disposés régulièrement à la base 4a de l'enceinte 4. Le strippage s'effectue donc de préférence en milieu dense, à contre-courant des particules.

Les particules désactivées de catalyseur ainsi strippées sont évacuées à la base de l'enceinte 4 vers un régénérateur 9 par l'intermédiaire d'un conduit 10, sur lequel est prévue une vanne de régulation 11. Dans le régénérateur 9, le coke déposé sur les particules du catalyseur est brûlé à l'aide d'air, injecté à la base du régénérateur par une ligne 12, qui alimente des injecteurs 13 régulièrement espacés. Les particules du catalyseur traité, entraînées par le gaz de combustion, sont séparées par des cyclones 14, d'où le gaz de combustion est évacué par une ligne 15, tandis que les particules de catalyseur sont rejetées vers la base du régénérateur 9, d'où elles sont recyclées par le conduit 3, équipé d'une vanne de régulation 16, à l'alimentation de l'élévateur 1.

Les caractéristiques dimensionnelles et opératoires d'un tel dispositif sont habituellement les suivantes :
- hauteur de la partie réactionnelle de l'élévateur 1 : 5 à 40 mètres,
- température de la charge à craquer : 75 à 450°C,
- débit d'alimentation de l'élévateur 1 en charge à traiter : 1000 à 20.000 tonnes par jour,
- débit d'alimentation de l'élévateur 1 en catalyseur : 3 à 50 tonnes par minute,
- température de craquage dans l'élévateur: 500 à 600 °C,
- temps de séjour de la charge dans l'élévateur 1 : 0,1 à 10 secondes,
- température de régénération du catalyseur : 650 à 900°C,
- temps de séjour du catalyseur dans le régénérateur 9 : 5 à 20 mn.

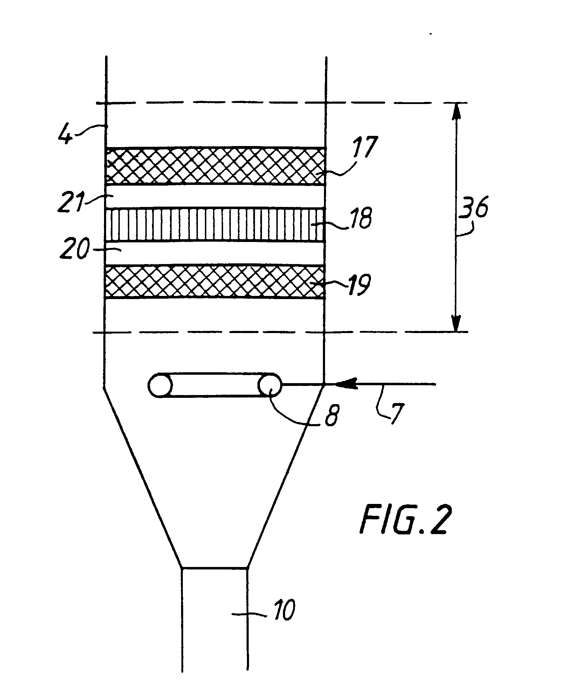

Le strippeur représenté schématiquement sur la figure 2 comporte un dispositif selon l'invention. Trois éléments de garnissage 17, 18 et 19, ont été ajoutés au strippeur dans la zone de circulation 36 à contre-courant des particules de catalyseur en suspension et du fluide gazeux de strippage.

Ces trois éléments 17, 18 et 19, sont dressés sensiblement perpendiculairement par rapport à l'axe de l'enceinte 4 et sont sensiblement parallèles l'un à l'autre. Ils sont localisés au dessus des injecteurs 8 de distribution de fluide de strippage. Leurs fixations aux parois de l'enceinte 4 sont assurées par des moyens classiques connus, qui les maintiennent immobiles, lors du strippage.

Dans ce mode de réalisation, les éléments de garnissage 17, 18 et 19 sont séparés par des espaces 20, 21, destinés à éviter des problèmes d'obturation et d'accumulation de débris, notamment de coke, entre les éléments de garnissage. Dans ces espaces 20, 21, le strippage est considérablement amélioré du fait d'un écoulement radial du gaz et des particules, et du fait d'un rapport particule/gaz homogène. En effet, ces espaces 20, 21, autorisent les éventuels débris orientés radialement à passer d'un élément de garnissage à un autre. De plus, ces espaces 20, 21, permettent la redistribution des particules et du fluide en formant un mélange dense fluidisé turbulent entre les éléments de garnissage.

Les éléments de garnissage sont constitués de tôles plissées assemblées et coupées transversalement par rapport à leur plan. Chaque élément de garnissage est positionné à l'intérieur du strippeur, de façon telle que le plan des tôles plissées d'un premier élément soit orienté de façon à former un angle de sensiblement 90 degrés avec le plan des tôles plissées de l'élément voisin. Ainsi, la direction de circulation des grains de catalyseur et du fluide, après passage dans un premier élément, forme un angle de sensiblement 90 degrés avec la direction de circulation des grains de catalyseur et du fluide, après passage dans un second élément, ce qui favorise une meilleure redistribution des particules de catalyseur à l'extérieur des éléments de garnissage et la formation d'un état de perturbation organisé avec le fluide.

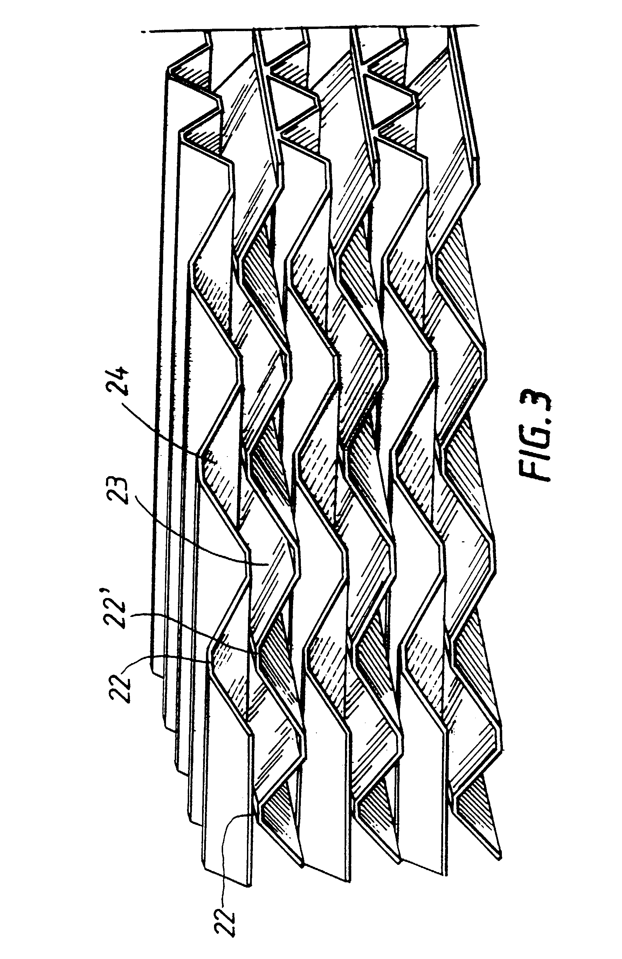

La figure 3 représente une vue partielle de dessus d'une section d'un élément de garnissage.

L'élément de garnissage est constitué de tôles plissées coupées transversalement par rapport à leur plan. Ces tôles plissées sont assemblées de façon telle que l'arête de la plissure 22 de chaque tôle forme un angle de sensiblement 90 degrés avec l'arête de la plissure 22' de la tôle adjacente. Ainsi, les plissures de chaque tôle s'entrecroisent avec les plissures de la tôle adjacente et constituent des cellules formant un réseau de canaux croisés 23, 24. Ces croisements ou intersections constituent des zones de contact privilégiées entre les particules et le fluide.

Lors du passage à travers ces canaux 23, 24, les particules et le fluide à contre-courant sont maintenus dans des conditions de fluidité dense. La section des cellules est choisie afin d'éviter tout phénomène d'obstruction des particules à l'intérieur de l'élément de garnissage.

Dans le cas présenté, les tôles ondulées sont soudées les unes aux autres au niveau de l'arête des plissures 22, 22'. Les particules de catalyseur pénètrent et sont guidées dans les canaux 23, 24. L'agencement des canaux permet de dévier les particules à chaque intersection formée par les plissures d'une première tôle avec les plissures d'une seconde tôle adjacente, améliorant ainsi les divisions et recombinaisons des dites particules et du fluide de strippage à contre-courant.

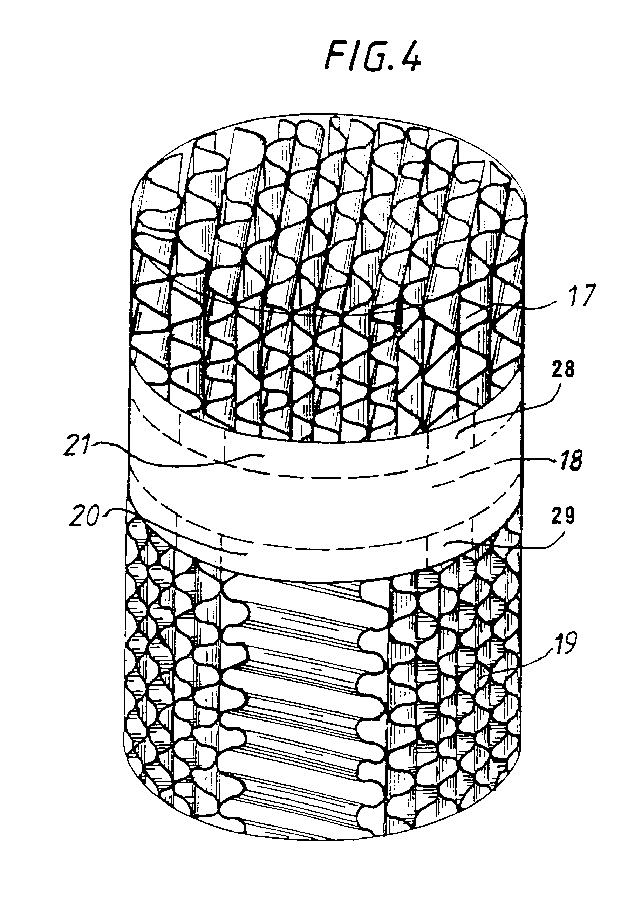

La figure 4 représente une vue d'ensemble d'un garnissage comportant trois éléments 17, 18 et 19. Les éléments sont séparés par des entretoises 28, 29, afin de permettre la redistribution dans les espaces 20, 21, des particules et du fluide. Le fluide de strippage circule de bas en haut à travers les éléments et les particules de haut en bas, sans que les phénomènes de rétromélange et renardage soient observés.

### Exemples

Les essais effectués dans des conditions similaires et rapportés ci-dessous visent à illustrer l'invention et à souligner certains avantages apportés par le présent dispositif et procédé de strippage.

Des tests représentatifs ont été réalisés ici afin de reproduire le procédé selon l'invention dans une enceinte de strippage d'une unité de craquage catalytique en lit fluidisé entraîné. Les résultats de ces tests ont été comparés aux performances d'un dispositif muni de chicanes dans la zone de strippage.

Les tests s'effectuent dans une unité commerciale à une pression de sensiblement 2.10⁵ Pascal. Le débit de strippage est maintenu à un haut niveau de 2,8 tonnes de vapeur de strippage par heure, ce qui correspond à un taux de lavage du volume vide de 260 %. La charge traitée est un mélange de VGO (vacuum gas oil), et de résidu atmosphérique de brut de Mer du Nord (proportion 40/60) et l'unité est opérée à 520 °C.

| | Test No 1: Essai avec grilles | TEST No 2 Essai avec garnissage | Test No 3 Essai avec garnissage |
|---|---|---|---|
| Vapeur de strippage t/h | 2,8 | 2,8 | 1,6 |
| Température du régénérateur (°C) | 743 | 695 | 711 |
| Rapport C/O | 4,8 | 6,4 | 5,8 |
| Δcoke (% en poids) | 0,97 | 0,75 | 0,82 |
| Hydrogène du coke (% poids) | 7,8 | 6,0 | 6,6 |
| Post combustion (°C) | +15 | -3 | +2 |
| Addition de particules de catalyseur frais t/j | 5,0 | 3,0 | 3,5 |

Dans le test No 1, l'enceinte de strippage comporte dans la zone de strippage des chicanes de structure classique et aux performances semblables à celles des grilles décrits dans le brevet US N° 2,472,502. Dans le test No 2, l'enceinte de strippage comporte dans la zone de strippage 3 éléments de strippage espacés conforme à l'invention.

On observe une importante baisse de la température de régénération et de la température de post-combustion (appelé communément "afterburning") dans l'unité où l'invention a été mise en oeuvre. L'hydrogène du coke et le pourcentage de Acoke sont également réduits, confirmant donc le bon contact et l'effet de lavage dans la zone de strippage et donc une très bonne récupération des hydrocarbures sur et entre les particules de catalyseur.

L'efficacité du strippage permet d'augmenter le rapport C/O (rapport massique du catalyseur C en contact avec la charge O) au sein du dispositif et donc d'accroître la conversion de la charge en mettant celle-ci en présence d'un plus grand nombre de sites actifs des particules de catalyseur.

De plus, la stabilité des particules de catalyseur du dispositif est augmentée, ce qui permet de réduire l'ajout quotidien de particules de catalyseur frais, et le soutirage quotidien de particules désactivées de catalyseur tout en conservant le volume adéquat de particules dans le dispositif.

Un troisième essai (test No 3) a été effectué avec une vapeur de strippage réduite de l'ordre de 1,6 t/h. Les résultats sont également satisfaisants vis-à-vis de ceux du cas No 1. Ainsi, le strippage selon l'invention autorise une diminution de la consommation de vapeur de strippage, tout en améliorant son efficacité par rapport aux moyens de l'art antérieur. En outre, cela se traduit par une économie d'énergie et une réduction du volume d'eau polluée résultant de la condensation de la vapeur utilisée pour le strippage.

Les résultats ci-dessus traduisent les gains apportés par ce nouveau dispositif de strippage. Notamment, l'amélioration du contact entre le fluide gazeux et les particules de catalyseur se traduit par une réduction de l'entraînement des hydrocarbures vers le régénérateur, une baisse de la teneur en hydrogène du coke et par l'élimination du phénomène de post-combustion.

## Revendications

1. Dispositif pour le strippage de particules solides fluidisées, à contre-courant d'un fluide gazeux de strippage, comprenant :
- une enceinte de strippage (4, 4a) sensiblement verticale ;
- au moins un conduit débouchant au sommet de l'enceinte, pour l'introduction des particules ;
- au moins un conduit (10) raccordé à la base de l'enceinte, pour l'évacuation des particules strippées ;
- au moins une ligne d'évacuation de la charge craquée ;
- au moins une ligne (8) d'alimentation de fluide gazeux de strippage, débouchant à la base de l'enceinte (4a) ;
- à l'intérieur de l'enceinte, une zone de circulation vers le bas des particules en suspension à contre-courant du dit fluide ;
ce dispositif étant caractérisé en ce qu'il comporte au moins un garnissage (17, 18, 19) constitué d'au moins un élément dont la section de passage est essentiellement transversale à l'axe de l'enceinte, cet élément s'étendant suivant toute la section transversale de l'enceinte dans la zone de circulation et étant constitué de cellules à travers lesquelles passent les particules et le fluide de strippage, ces cellules orientant de façon sensiblement radiale la circulation du fluide et les particules à stripper.

2. Dispositif selon la revendication 1, caractérisé en ce que l'élément de garnissage oriente à l'extérieur du dit élément sensiblement 50 % du fluide et des particules dans une première direction et sensiblement 50 % du fluide et des particules dans une seconde direction formant un angle de 10 à 90 degrés avec la première direction.

3. Dispositif selon l'une des revendications 1 et 2, caractérisée en ce que l'élément de garnissage (17, 18, 19) est un mélangeur statique.

4. Dispositif selon l'une des revendications 1 à 3, caractérisé en ce que l'élément de garnissage est constitué de cellules formées par l'assemblage de tôles plissées (22, 22'), coupées transversalement par rapport à leurs plans, ces tôles plissées étant assemblées de façon telle que l'arête de plissure (22') de chaque tôle forme un angle de sensiblement 45 à 135 degrés avec l'arête de plissure (22') de la tôle adjacente.

5. Dispositif selon l'une des revendications 1 à 4, caractérisé en ce que les cellules forment un réseau de canaux croisés (23, 24) à section sensiblement uniforme.

6. Dispositif selon l'une des revendications 4 et 5, caractérisé en ce que sensiblement 50 % des particules et du fluide sont déviés de leur direction initiale, à l'intérieur des éléments, à chaque intersection formée par les plissures (22) d'une première tôle avec les plissures (22') d'une seconde tôle adjacente, la direction de cette déviation faisant un angle de sensiblement 10 à 90 degrés par rapport à la direction initiale.

7. Dispositif selon l'une des revendications 4 et 5, caractérisé en ce que les intersections formées par les plissures (22) d'une première tôle avec les plissures (22') d'une seconde tôle adjacente constituent des zones de contact entre les particules et le fluide de strippage.

8. Dispositif selon la revendication 1, caractérisé en ce que le garnissage comporte au moins deux éléments de garnissage (17, 18, 19) parallèles disposés l'un au dessus de l'autre.

9. Dispositif selon la revendication 8, caractérisé en ce que le garnissage comporte trois éléments parallèles.

10. Dispositif selon l'une des revendications 8 et 9, caractérisé en ce que le plan des tôles plissées (22) du premier élément est orienté de façon à former un angle de sensiblement 45 à 90 degrés avec le plan des tôles plissées (22') de l'élément contigu.

11. Dispositif selon l'une des revendications 8 et 9, caractérisé en ce que l'épaisseur totale E du garnissage est telle, par rapport à la hauteur H de la zone de strippage de l'enceinte, que le rapport E/H soit compris entre 10 et 80%.

12. Dispositif selon la revendication 1, caractérisé en ce que l'espace occupé par le garnissage constitue environ 20 à 80% du volume intérieur de l'enceinte de strippage.

13. Dispositif selon l'une des revendications 8 et 9, caractérisé en ce que les éléments de garnissage (17, 18, 19) sont espacés les uns des autres, l'espace les séparant favorisant la redistribution des particules dans le fluide.

14. Dispositif selon la revendication 1, caractérisé en ce que le volume des cellules de l'élément de garnissage par rapport au volume total de cet élément est compris entre 50 et 98 %.

15. Dispositif selon la revendication 13, caractérisé en ce que le volume des cellules de l'élément de garnissage par rapport au volume total de cet élément est compris entre 90 et 98 %.

16. Procédé de strippage de particules solides fluidisés, à contre-courant d'un fluide de strippage comprenant les étapes suivantes :
- introduire les particules à stripper au sommet d'une enceinte de strippage (4, 4a) sensiblement verticale ;
- introduire le fluide de strippage à la base de l'enceinte (4a) ;
- faire passer les dites particules en suspension vers le bas à travers la zone de circulation (36) de l'enceinte, à contre-courant du dit fluide ;
ce procédé étant caractérisé en ce que les particules et le fluide à contre-courant passent à travers au moins un garnissage (17, 18, 19) constitué d'au moins un élément dont la section de passage est transversale par rapport à l'axe de l'enceinte, cet élément, constitué de cellules, étant disposé suivant toute la section transversale de l'enceinte, dans la zone de circulation, et orientant radialement les dites particules et fluide dans l'enceinte.

17. Utilisation du dispositif selon l'une des revendications 1 à 15 ou du procédé selon la revendication 16 dans le strippeur (4a) d'une unité de craquage catalytique à l'état fluide.

## Claims

1. An apparatus for stripping fluidised solid particles countercurrently to a gaseous stripping fluid, comprising:
- a substantially vertical stripping enclosure (4,4a);
- at least one duct discharging at the top of the enclosure, for introducing the particles;
- at least one duct (10) connected to the base of the enclosure, for the removal of the stripped particles;
- at least one line for removing the cracked charge;
- at least one line (8) for supplying gaseous stripping fluid, discharging at the base of the enclosure (4a) ;
- inside the enclosure a zone for circulating towards the base suspended particles countercurrently to said fluid;
said apparatus being characterised in that it comprises at least one packing (17,18,19) formed by at least one element whose passage section is essentially transversal to the axis of the enclosure, said element extending over the entire cross-section of the enclosure in the circulation zone and being formed by cells through which the particles and the stripping fluid pass, said cells directing substantially radially the circulation of fluid and the particles to be stripped.

2. An apparatus according to claim 1, characterised in that the packing element directs to the outside of said element substantially 50 % of the fluid and of the particles in a first direction and substantially 50 % of the fluid and of the particles in a second direction forming an angle of 10 to 90 degrees to the first direction.

3. An apparatus according to either of claims 1 and 2, characterised in that the packing element (17,18,19) is a static mixer.

4. An apparatus according to any one of claims 1 to 3, characterised in that the packing element comprises cells formed by an assembly of folded sheets (22,22') which are cut transversely in relation to their planes, said folded sheets being assembled in such a way that the folding edge (22') of each sheet forms an angle of substantially 45 to 135 degrees with the folding edge (22') of the adjacent sheet.

5. An apparatus according to any one of claims 1 to 4, characterised in that the cells form a network of crossed channels (23,24) of substantially uniform section.

6. An apparatus according to either of claims 4 and 5, characterised in that substantially 50 % of the particles and of the fluid are deviated from their initial direction, inside the elements, at each intersection formed by the folds (22) of a first sheet with the folds (22') of a second adjacent sheet, the direction of this deviation forming an angle of substantially 10 to 90 degrees in relation to the initial direction.

7. An apparatus according to either of claims 4 and 5, characterised in that the intersections formed by the folds (22) of a first sheet with the folds (22') of an adjacent second sheet form contact zones between the particles and the stripping fluid.

8. An apparatus according to claim 1, characterised in that the packing comprises at least two parallel packing elements (17,18,19) disposed one above the other.

9. An apparatus according to claim 8, characterised in that the packing comprises three parallel elements.

10. An apparatus according to either of claims 8 and 9, characterised in that the plane of the folded sheets (22) of the first element is directed so as form an angle of substantially 45 to 90 degrees with the plane of the folded sheets (22') of the contiguous element.

11. An apparatus according to either of claims 8 and 9, characterised in that the total thickness E of the packing is such, in relation to the height H of the stripping zone of the enclosure, that the ratio E/H is between 10 and 80 %.

12. An apparatus according to claim 1, characterised in that the space occupied by the packing comprises about 20 to 80 % of the interior volume of the stripping enclosure.

13. An apparatus according to either of claims 8 and 9, characterised in that the packing elements (17,18,19) are spaced apart, the space separating them being favourable to the redistribution of the particles in the fluid.

14. An apparatus according to claim 1, characterised in that the volume of cells of the packing element in relation to the total volume of this element is between 50 and 98 %.

15. An apparatus according to claim 13, characterised in that the volume of cells of the packing element in relation to the total volume of this element is between 90 and 98 %.

16. A process for stripping fluidised solid particles, countercurrently to a stripping fluid, comprising the following stages:
- introducing the particles to be stripped at the top of a substantially vertical stripping enclosure (4,4a);
- introducing the stripping fluid at the base of the enclosure (4a);
- causing said suspended particles to pass towards the base through the circulation zone (36) of the enclosure, countercurrently to said fluid;
said process being characterised in that the particles and the countercurrent fluid pass through at least one packing (17,18,19) formed by at least one element whose passage section is transversal in relation to the axis of the enclosure, said element, which is formed by cells, being disposed over the entire cross-section of the enclosure, in the circulation zone, and directing radially said particles and fluid in the enclosure.

17. Use of the apparatus according to any one of claims 1 to 15 or of the process according to claim 16 in the stripper (4a) of a fluid catalytic cracking unit.

## Patentansprüche

1. Vorrichtung zum Abstreifen bzw. Strippen fluidisierter Feststoff-Teilchen, im Gegenstrom zu einem gasförmigen Stripper-Strömungsmittel, wobei die Vorrrichtung umfaßt:
- einen im wesentlichen vertikalen Stripping-Behälter (4,4a);
- wenigstens eine am oberen Ende des Behälters mündende Leitung zum Einbringen der Teilchen;
- wenigstens eine an der Basis des Behälters angeschlossene Leitung zum Ausbringen bzw. zur Abfuhr der gestrippten Teilchen;
- wenigstens eine Leitung zum Austritt bzw. zur Entnahme der gekrackten Charge;
- wenigstens eine an der Basis des Behälters (4a) mündende Speiseleitung (8) zur Zufuhr des gasförmigen Stripping-Strömungsmittels;
- im Inneren des Behälters eine Zone für die Abwärts-Zirkulation der Teilchen in Suspension im Gegenstrom zu dem genannten Strömungsmittel;
**dadurch gekennzeichnet**, daß die Vorrichtung wenigstens einen Einsatz (17, 18, 19) aufweist, der aus einem Element mit einem zur Behälterachse im wesentlichen transversalen Durchtrittsquerschnitt besteht, das sich über den gesamten Transversal-Querschnitt des Behälters in der Zirkulationszone des Behälters erstreckt und aus Zellen besteht, welche die Teilchen und das Stripping-Strömungsmittel durchsetzen, wobei diese Zellen die Zirkulation des Strömmungsmittels und der zu strippenden Teilchen in einer im wesentlichen radialen Richtung lenken.

2. Vorrichtung nach Anspruch 1, dadurch gekennzeichnet, daß das Einsatzelement im wesentlichen 50% des Strömungsmittels und der Teilchen auswärts in einer ersten Richtung, und im wesentlichen 50% des Strömungsmittels und der Teilchen in einer zweiten Richtung lenkt, die mit der ersten Richtung einen Winkel von 10° bis 90° bildet.

3. Vorrichtung nach einem der Ansprüche 1 und 2, dadurch gekennzeichnet, daß das Einsatzelement ein statischer Mischer ist.

4. Vorrichtung nach einem der Ansprüche 1 bis 3, dadurch gekennzeichnet, daß das Einsatzelement aus Zellen besteht, die durch ein Aggregat von gefalteten bzw. gewellten, quer zu ihrer jeweiligen Ebene geschnittenen Blechen gebildet werden, wobei die Faltbleche so zu dem Aggregat zusammengebaut sind, daß jeweils die Faltlinie bzw. -kante (22') jedes Blechs mit der Faltlinie bzw. -kante (22') des benachbarten Blechs einen Winkel von im wesentlichen 45° bis 135° bildet.

5. Vorrichtung nach einem der Ansprüche 1 bis 4, dadurch gekennzeichnet, daß die Zellen ein Netz von sich kreuzenden Kanälen (23, 24) mit im wesentlichen gleichförmigem Querschnitt bilden.

6. Vorrichtung nach einem der Ansprüche 4 und 5, dadurch gekennzeichnet, daß im wesentlichen 50% der Teilchen und des Strömungsmittels im Inneren der Elemente an jeder der durch die Faltlinien bzw. Faltkanten (22) eines ersten Blechs mit den Faltkanten bzw. -linien (22') eines zweiten benachbarten Blechs gebildeten Kreuzungs- bzw. Schnittstellen aus ihrer anfänglichen Richtung abgelenkt werden, wobei die Ablenkrichtung mit der anfänglichen Richtung einen Winkel von im wesentlichen 10° bis 90° bildet.

7. Vorrichtung nach einem der Ansprüche 4 und 5, dadurch gekennzeichnet, daß die von den Faltkanten (22) eines ersten Blechs mit den Faltkanten (22') eines benachbarten zweiten Blechs gebildeten Kreuzungs- bzw. Schnittstellen Kontaktzonen zwischen den Teilchen und dem Stripping-Strömungsmittel bilden.

8. Vorrichtung nach Anspruch 1, dadurch gekennzeichnet, daß der Einsatz wenigstens zwei parallele übereinander angeordnete Einsatzelemente (17, 18, 19) aufweist.

9. Vorrichtung nach Anspruch 8, dadurch gekennzeichnet, daß der Einsatz drei parallele Elemente aufweist.

10. Vorrichtung nach einem der Ansprüche 8 und 9, dadurch gekennzeichnet, daß die Ebene der Falt- bzw. Wellbleche (22) des ersten Elements so ausgerichtet ist, daß sie mit der Ebene der Falt- bzw. Wellbleche (22') des benachbarten Elements einen Winkel von im wesentlichen 45° bis 90° bildet.

11. Vorrichtung nach einem der Ansprüche 8 und 9, dadurch gekennnzeichnet, daß die Gesamtdicke E des Einsatzes bezüglich der Höhe H der Strippingzone des Behälters so gewählt ist, daß das Verhältnis E/H einen Wert im Bereich zwischen 10% und 80% aufweist.

12. Vorrichtung nach Anspruch 1, dadurch gekennzeichnet, daß der von dem Einsatz eingenommene Raum ca. 20% bis 80% des Innenvolumens des Stripping-Behälters ausmacht.

13. Vorrichtung nach einem der Ansprüche 8 und 9, dadurch gekennzeichnet, daß die Einsatzelemente (17, 18, 19) in Abständen voneinander angeordnet sind, wobei der sie voneinander trennende Abstand die Um- und Wiederverteilung der Teilchen in dem Strömungsmittel begünstigt.

14. Vorrichtung nach Anspruch 1, dadurch gekennzeichnet, daß das Volumen der Zellen des Einsatzelements bezogen auf das Gesamtvolumen dieses Elements zwischen 50% und 98% ausmacht.

15. Vorrichtung nach Anspruch 13, dadurch gekennzeichnet, daß das Volumen der Zellen des Einsatzelements bezogen auf das Gesamtvolumen dieses Elements zwischen 90% und 98% ausmacht.

16. Verfahren zum Strippen fluidisierter Feststoffteilchen im Gegenstrom zu einem Stripping-Strömungsmittel, wobei das Verfahren die folgenden Schritte bzw. Stufen einschließt:
- Einbringen der zu strippenden Teilchen am oberen Ende eines im wesentlichen vertikalen Stripping-Behälters (4,4a);
- Einleitung des Stripper-Strömungsmittels an der Basis des Stripperbehälters (4a);
- Hindurchleiten der genannten Teilchen in Suspension abwärts durch die Zirkulationszone (36) des Behälters, im Gegenstrom zu dem genannten Strömunsmittel;
**dadurch gekennzeichnet**, daß die Teilchen und das Strömungsmittel im Gegenstrom wenigstens einen Einsatz (17, 18, 19) druchsetzen, der aus wenigstens einem Element besteht, dessen Durchtrittsquerschnitt quer bezüglich der Behälterachse liegt, wobei dieses aus Zellen bestehende Element über den gesamten Transversalquerschnitt des Behälters in der Zirkulationszone angeordnet ist und die genannten Teilchen und das Strömungsmittel in dem Behälter in radialer Richtung lenkt.

17. Verwendung der Vorrichtung nach einem der Ansprüche 1 bis 15, oder Anwendung des Verfahrens nach Anspruch 16, im Stripperteil (4a) einer Anlage zum katalytischen Kracken im Fließzustand.
